# EUROPÄISCHE PATENTSCHRIFT

(11) **EP 0 960 710 B1**
(45) Veröffentlichungstag und Bekanntmachung des Hinweises auf die Patenterteilung: **20.08.2003**
(21) Anmeldenummer: 99108263.7
(22) Anmeldetag: 27.04.1999
(51) Int. Cl.: B29C 43/24, B29C 43/50, B29C 43/46, B29C 43/22

(54) **Extrusions- und Kalandrieverfahren und Vorrichtung zur Herstellung einer mit Ankernoppen oder anderer Formen versehenen Kunststoffplatte**
Method et apparatus for extruding and calendering a plastic sheet provided with anchoring projections or similar forms
Procédé et dispositif pour l'extrusion et le calendrage d'une plaque en matière plastique pourvue de protubérances d'ancrage ou formes similaires

(30) Priorität: 28.04.1998 AT 71198
(43) Veröffentlichungstag der Anmeldung: 01.12.1999
(73) Patentinhaber: Alois Gruber GmbH, 4540 Bad Hall (AT)
(72) Erfinder: Plammer, Alfred, 4863 Seewalchen (AT)
(74) Vertreter: Rupprecht, Klaus, Dipl.-Ing.

(56) Entgegenhaltungen:
- DE-A- 19 647 232
- US-A- 4 323 533
- US-A- 4 957 425

## Beschreibung

Die Erfindung bezieht sich auf eine Vorrichtung zur kontinuierlichen Herstellung einer mit Ankernoppen oder anderen Formen versehenen Kunststoffplatte. Diese erfindungsgemäße Vorrichtung wird beispielsweise als Teil einer Extrusionsanlage für thermoplastische Kunststoffe verwendet, um Ankerplatten zu extrudieren, die als chemikalienbeständige Auskleidung oder Verkleidung für Bauteile wie Rohre, Rohrleitungen, Kanäle, Becken, Behälter, Säulen usf. aus in der Regel zementgebundenen Werkstoffen wie Beton eingesetzt werden. Durch die Verbindung zwischen der Ankernoppe auf der Kunststoffplatte und dem tragenden Bauteil aus Beton wird eine kraftschlüssige Verbindung erreicht. Darüber hinaus betrifft die Erfindung ein Verfahren zur Herstellung von derartigen Kunststoffplatten.

Die Ankerplatte wird in der Regel aus thermoplastischen Kunststoffen mit hoher Temperatur- und Chemikalienbeständigkeit wie Polyethylen, Polypropylen, PVC, PVDF, ETFE oder E-CTFE in einem kontinuierlichen Extrusions- und Kalandrierverfahren hergestellt. Die Kunststoffplatte kann einschichtig oder im Co-Extrusionsverfahren mehrschichtig extrudiert sein oder als ein- oder mehrlagige Kunststoffplatte mit Aluminium oder anderen Substraten, Geweben oder Vliesen aus Polyester oder Glasfasern laminiert und beschichtet sein.

Die DE 296 15 818 U stellt eine Vorrichtung vor, die trapezförmige Erhebungen auf einer Kunststoff-Platte in einem zweiten Arbeitsgang mechanisch in der Art quetscht, daß eine hinterschnittene Form erzeugt wird.

Die EP 0436 058 B1 schützt eine Form, die durch Eingießen von Kunststoff-Schmelze in die flügelförmigen Formnester einer Walze entsteht. Die Formnester sind über den Umfang der Walze angebracht und mit der Walze fest verbunden. Die Schmelze füllt eine hinterschnittene, flügelförmige Form, wird abgekühlt und im abgekühlten Zustand aus der Walze gerissen. Die flügelförmige Form wird beim Herausreissen aus der Walze auf einer Seite deformiert. Die verfahrensbedingten Masseanhäufungen am Fuss der flügelförmigen Form verursachen beim Abkühlvorgang auf der glatten Seite der Kunststoffplatte stark sichtbare Einfallstellen durch das Nachschwinden des thermoplastischen Kunststoffes.

Die DE 3108972 A1 beschreibt ein Verfahren, bei dem durch Schweissen Spritzgussformen mit einer glatten Platte zu einer Ankerplatte verbunden werden. Dieses Verfahren erfordert mehrere Arbeitsgänge: Herstellen der Spritzgussformen, Herstellen der Platte, Verschweissen der Spritzgussformen mit der Platte. Dieses Vorgehen verursacht hohe Herstellkosten im Vergleich zu kontinuierlichen Extrusion.

Aus den Dokumenten FR 1.102.294 A und US 2.816.323 sowie DE 2934 799 A1 ist ein Extrusions verfahren bekannt, in dem hinterschnittene Stegplatten in Produktionsrichtung parallel zu einander extrudiert werden. Dieses Verfahren eignet sich für die Auskleidung gegossener Betonrohre, weist jedoch schlechte Ergebnisse bei Dauerzeitstandsprüfungen auf. Diese Stegplatten werden in der Regel aus PVC in einem Extrusionsverfahren hergestellt. Die Formgebung der Stege erfolgt in einer Flachdüse. Die Oberlippe der Flachdüse wurde in der Form der Stege gefertigt. Die Scher- und Temperaturempfindlichkeit des Kunststoffes PVC ermöglicht bisher Fertigungsbreiten bis nur ca. 1200 mm. Bei der Auskleidung von grösseren Bauwerken oder Betonrohren mit grösserem Durchmesser müssen deshalb mehrere Teilstücke zusammengeschweisst werden. Diese Schweissnähte sind Schwachpunkte der Auskleidung und verursachen weitere Herstellkosten.

Das Dokument DE 19647232 beschreibt ein Verfahren gemäß den jeweiligen Oberbegriffen der Ansprüche 1 und 3 und eine Vorrichtung gemäß den jeweilsgen Oberbegriffen den Ansprüche 4 und 9.

Allen oben beschriebenen Verfahren und Vorrichtungen zur Herstellung von Platten mit hinterschnittenen Formen fehlt die Möglichkeit, Anker in Form eines auf den Kopf gestellten Kegels oder in Form stegförmiger Anker quer zur Produktionsrichtung kontinuierlich in einem Arbeitsgang zu produzieren. Die bisher bekannten Verfahren beeinträchtigen die Funktion der Ankerplatte durch nachträgliche Verformung, Beschädigung oder Schwächung des Ankers oder der Platte oder sind dazu gar nicht in der Lage. Teilweise sind die Verfahren in der technisch möglichen Breite oder der minimal möglichen Plattendicke limitiert.

Die Aufgabe der Erfindung besteht darin, ein Verfahren anzugeben, das eine kontinuierliche Produktion von Kunststoffplatten der eingangs genannten Art in einem Arbeitsgang ermöglicht, die die Herstellung von besonders kraftschlüssigen Ankerformen dergestalt ermöglicht, daß diese beispielsweise: in der Form von auf den Kopf stehenden Kegeln oder Pyramiden oder
in der Form von quer zur Produktionsrichtung extrudierten Stegprofilen ausgeführt sind und die die Anker oder die Verbindung zwischen Anker und Platte bei der Herstellung nicht schwächt, nicht verformt oder beschädigt. Eine weitere Aufgabe der Erfindung liegt darin, eine Vorrichtung zum Herstellen von derartigen Kunststoffplatten zu schaffen.

Erfindungsgemäß wird dies mit einer Vorrichtung und einem Verfahren dadurch erreicht, daß eine temperierte Walze über den ganzen Umfang oder eine temperierte Platte über die ganze Fläche mit beweglichen Form-/Entformleisten ausgerüstet ist, an deren Längsseiten die zu formenden Anker oder Stege eingearbeitet sind. Die flüssige Kunststoffschmelze durch den im Walzenspalt zwischen der formgebenden Walze und einer Gegenwalze entstehenden Drucks, in die in die Form-/Entformleisten eingearbeiteten Formen gefüllt und abgekühlt. Beim Füllen der Form liegen die Form-/Entform-Leisten auf der temperierten Walze oder der temperierten Platte auf. Nach der Abkühlung der Formen wird die entstandene Ankerplatte durch Heben der Form-/Entleisten zerstörungsfrei wieder freigegeben. Die Formen können erneut gefüllt werden.

Die erfindungsgemäße Vorrichtung weist verschiedene Vorteile auf. Aufgrund der beweglichen Form-/Entform-Leisten wird die kontinuierliche Produktion von Ankerformen auf einer Kunststoffplatte zerstörungsfrei möglich. Dadurch können besonders kraftschlüssige Ankerformen wirtschaftlich produziert werden, die bisher nur in mehreren Arbeitsgängen auf eine glatte Platte aufgeschweißt werden konnten. Durch einfachen Austausch der beweglichen Form-/Entformleisten können ohne zeitaufwendigen Wechsel von kompletten Walzen auf der gleichen Vorrichtung und der gleichen Kühlwalze verschiedene Ankerformen extrudiert werden. Damit können verschiedene Marktsegmente und deren unterschiedliche Anforderungen ohne grössere Investitionen für mehrere Walzen bedient werden. Die bisherige Limitierung der Breite bei Stegplatten in Extrusionsrichtung wird überwunden. Dadurch fällt die teure Vorkonfektionierung durch Schweißen weg.

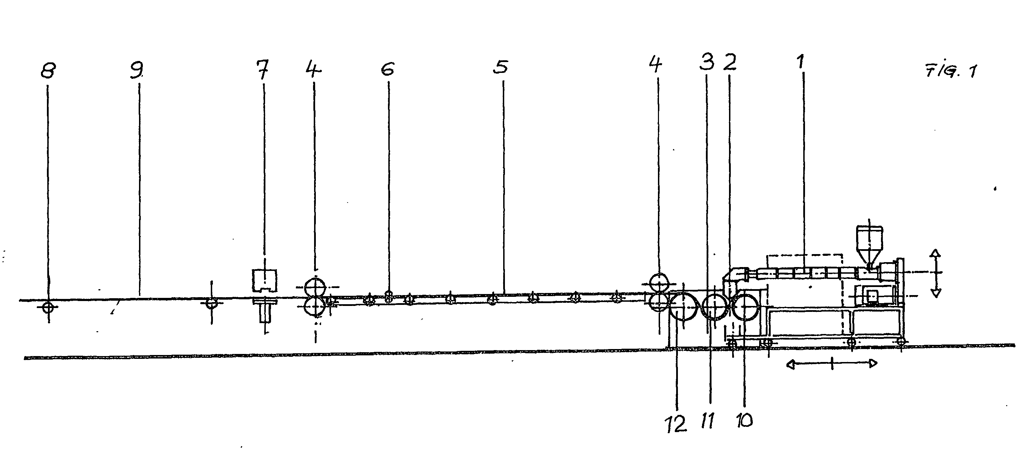

Im folgenden wird die Erfindung anhand eines Beispiels und mit Bezug auf die beiliegenden Zeichnungen näher erläutert, wobei
Fig. 1 im Aufriß eine erfindungsgemäße Vorrichtung zeigt, die in einer Extrusionsanlage für Ankerplatten angebracht ist, und
Fig. 2 im Querschnitt und Fig. 3 in Draufsicht die erfindungsgemäße Vorrichtung für die kontinuierliche Herstellung von thermoplastischen Ankerplatten zeigen.
Fig. 4 zeigt den erfindungsgemäßen Antrieb der Form-/Entformleisten durch Zylinder und Kolbenstangen.

Die Figuren 5 - 10 zeigen in Draufsicht und im Schnitt verschiedene Formen von Ankern und Stegen, die mit der erfindungsgemäßen Vorrichtung besonders wirtschaftlich und zerstörungsfrei hergestellt werden können.

Eine wirtschaftliche Anwendung der erfindungsgemäßen Vorrichtung ist die kontinuierliche Extrusion von Ankerplatten aus thermoplastischen Kunststoffen für den Korrossionsschutz und die Isolierung von Gebäuden und Bauwerken aus Beton.

Fig. I zeigt eine bekannte Extrusionsanlage bestehend aus dem Extruder 1, der Flachdüse 2, dem 3-Walzen-Kalander 3, dem Abzug 4, der Kühlstrecke 5, der Randschnitteiririchtung 6, der Querschnitteinrichtung 7, dem Wickler 8 und einem Auflagetisch 9. Im Extruder 1 wird der verarbeitete Kunststoff aufgeschmolzen, homogenisiert und zur Flachdüse gefördert. Die Flachdüse formt die Schmelze zu einem flüssigen Band. Die geformte Schmelze wird aus der Flachdüse 2 in den ersten Walzenspalt des Kalanders 3 gegossen. Der Kalander 3 besteht aus den Walzen 10, 11 und 12 die vorzugsweise horizontal angeordnet sind. Die Walze 11 ist im Sinne der erfindungsgemäßen Vorrichtung ausgeführt. Die einzelnen Walzen sind einzeln angetrieben und individuell temperiert. Die Aufgabe des Kalanders ist es, die Schmelze zu einer Platte oder Folie mit Ankernoppen oder anderen Formen zu formen und zu kühlen. Der Abzug 4 umittelbar nach dem Kalander 3 ist als gummiertes Walzenpaar ausgeführt und dient dem spannungsfreien Abziehen der Ankerplatte. Auf der nachfolgenden Kühlstrecke 5 kühlt die Kunststoffplatte weiter ab und es erfolgt der Randschnitt 6. Nach einem zweiten Abzug 4 wird die Platte in die gewünschten Längen quergeschnitten 7. Der Wickler 8 wickelt dünne Platten auf, der Auflagetisch 9 nimmt die steifen Platten auf.

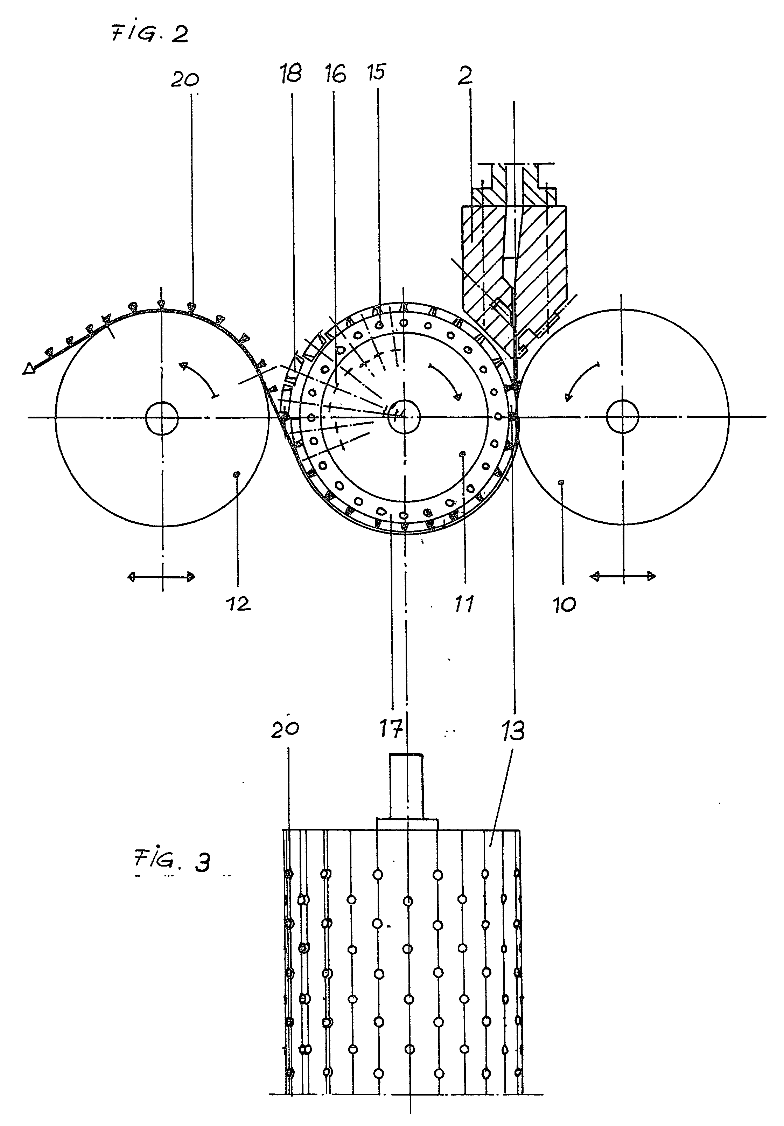

Fig. 2 zeigt die erfindungsgemässe Vorrichtung in der Anwendung als formgebende Kühlwalze 11 und einer Gegenwalze 10 mit glatter Oberfläche in einem horizontalen 3-Walzen-Kalander 3. Die erfindungsgemäße Vorrichtung besteht aus der Walze 11 und einem stabilen Walzenmantel 17, der am Umfang periphere Kühlbohrungen 15 über die gesamte Ballenlänge der Walze aufweist. Die Kühlbohrungen 15 führen die der Walze 11 durch die Kunststoffschmelze zugeführte Wärme wieder ab. Die Temperatur an der Walzenoberfläche und in den formgebenden Bereichen der Walze wird konstant gehalten. Die Außenfläche des Walzenmantels 17 ist als Vieleck ausgeführt, beispielsweise mit einer Teilung von 32 flachen Stellen. Die flachen Stellen sind so am Umfang angeordnet, daß die flachen Stellen mit den peripheren Kühlbohrungen 15 abwechseln. Daher können die flachen Stellen am Walzenmantel quer zum Aussenmantel 17 durchbohrt werden. Durch diese Bohrungen werden Leisten 13 auf der Walze 11 auf- und abbewegt, die dem erfindungsgemässen Formen und Entformen von Ankerplatten dienen und im folgenden als Form-/Entform-Leisten bezeichnet werden. Die Form-/Entform-Leisten 13 weisen in die Längsseite der Leiste eingearbeitete Formen für die Formgebung auf. Die Form-/Entform-Leisten 13 werden bevorzugt mittels Hydraulik- oder Pneumatikzylindern geöffnet und geschlossen. Die Form-/Entform-Leisten 13 werden beim Füllen der Formen an die flachen Stellen des Walzenmantels 17 angepresst. Im Spalt zwischen der Walze 10 und Walze 11 herrscht ein linienförmiger Druck, der die flüssige Kunststoffschmelze aus der Düse 2 in die Formen der auf dem Walzenmantel anliegenden Form-/Entform-Leisten 13 preßt. Nach dem Abkühlen der Schmelze zu einer Ankerplatte werden die Form-/Entform-Leisten 13 mittels der über die gesamte Ballenlänge angeordneten Zylinder 16 und der Kolbenstangen 18 angehoben und die Ankerplatte 20 wird zerstörungsfrei freigegeben und über die Walze 12 abgezogen.

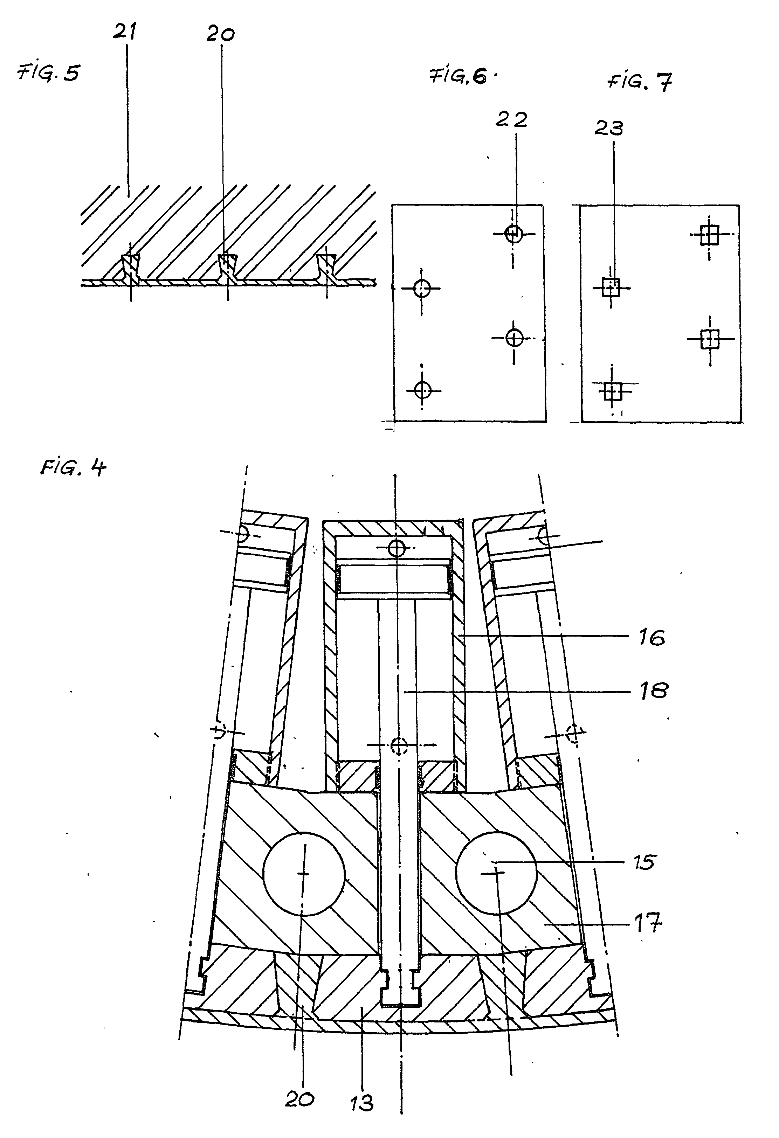

Die Fig. 3 zeigt in Draufsicht die erfindungsgemäße Vorrichtung bestehend aus den Form-/Entform-Leisten 13 und Bohrungen 20 an der Längsseite der Form-/Entform-Leisten für die Formgebung der Anker.

Die Fig. 4 verdeutlicht im Schnitt den Aufbau der erfindungsgemäßen Vorrichtung bestehend aus dem Walzenmantel 17 mit flachen Stellen an der Aussenfläche und den Kühlbohrungen 15, den Form-/Entform-Leisten 13, die von der Kolbenstange 18 im Zylinder 16 bewegt werden. Das Öffnen und Schliessen der Form-/Entform-Leisten 13 erfolgt vorzugsweise hydraulisch oder pneumatisch. Der Zeitpunkt des Öffnens oder Schliessens der Kolbenstangen kann mechanisch über Steuerscheiben oder elektrisch über Magnetventile gesteuert werden.

Die Fig. 5 zeigt im Schnitt den Einbau einer Ankerplatte 20 in den Beton 21. Die Ankerplatte wird als Schalung verwendet und der Beton wird in flüssiger Form hinter die Ankerplatte gegossen. Die Fig. 5 macht die ausgezeichnete kraftschlüssige Verbindung zwischen der Ankerplatte und dem Beton deutlich. Ebenso wird deutlich, dass die Ankerplatte 20 kontinuierlich in einem Extrusionsprozess nur mit Hilfe der erfindungsgemäßen Vorrichtung produziert werden kann.

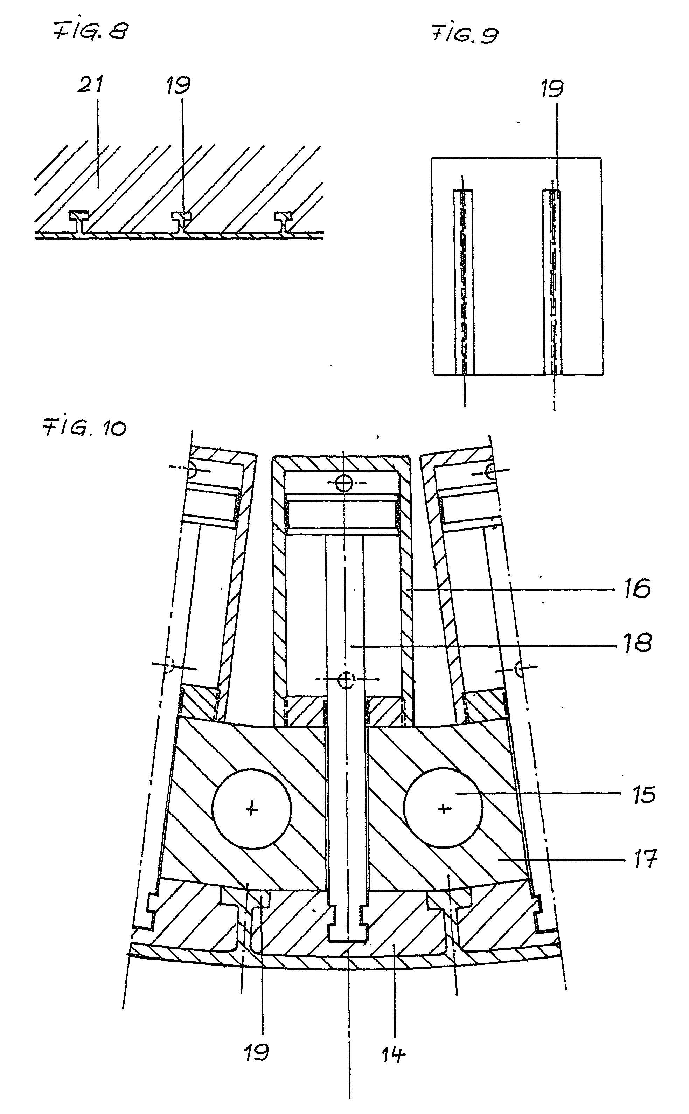

Die Formgebung der Anker oder anderer Formen wird von der gewählten Form in den Form-/Entform-Leisten 13 bestimmt. Die Formen werden erfindungsgemäss an der Längsseite der Form-/Entform-Leisten 13 eingearbeitet. Dies ermöglicht zusammen mit der beweglichen Anordnung der Form-/Entform-Leisten 13 die zerstörungsfreie Entformung. Die formgebende Walze kann mit unterschiedlich ausgeführten Form-/Entform-Leisten 13 verwendet werden. Die formgebende Walze wird dadurch flexibel einsetzbar und kann durch Tauschen der Form-/Entform-Leisten rasch auf neue Formen umgerüstet werden. Fig. 6 zeigt in Draufsicht die Ankerplatte 22 mit runden Formen dergestalt, daß der Anker einem auf den Kopf gestellten Kegel gleicht. Die Fig. 7 zeigt den Anker 23 als eine auf den Kopf gestellte Pyramide.

Die Fig. 8 zeigt den Schnitt einer Ankerplatten mit Stegen 19, die kraftschlüssig im Beton 21 eingebunden ist. Fig. 9 zeigt eine Ankerplatte 19, die Stege über die Breite der Kunststoffplatte aufweist, die quer zur Produktionsrichtung kontinuierlich und zerstörungsfrei extrudiert werden. Die Form-/Entform-Leisten 14 einer Ankerplatte mit Stegen 19 zeigt Fig. 10. Ankerplatten mit Stegen werden bevorzugt bei der Auskleidung von Betonrohren eingesetzt, insbesondere dann, wenn die Breite der Ankerplatte der Länge des Betonrohrs entspricht und dadurch teure Konfektionierungsarbeiten entfallen.

Die in die Form-/Entform-Leisten eingearbeiteten Formen können positiv oder negativ auf den Formleisten oder auch auf dem Walzenmantel ausgeführt sein. Die Formen können zylindrisch, mit einem positiven oder negativen Konus, hinterschnitten, in Längs- oder Querrichtung genutet, pyramidenförmig oder in Kombinationen davon ausgeführt sein. Die Formen können rund, quadratisch, rechteckig, oval oder vieleckig, T-förmig genutet oder in Kombinationen davon ausgeführt sein. Die Oberfläche der Formen kann glatt gehohnt, poliert, gerauht, erodiert, spiralig gefräst, gebohrt, genutet oder in Kombinationen davon ausgeführt sein. Die Dimensionen der Formen sind abhängig von der Höhe und Breite der Form- und Entformleisten und vom Hub der Hydraulik- oder Pneumatikzylinder. Die Distanz der Formen zueinander ist abhängig von der Breite und Länge der Form- und Entformleisten. Radiale oder axiale Entlüftungen im Walzenmantel oder in den Form- und Entformleisten verbessern das kontinuierliche Ausformen der Form.

## Patentansprüche

1. Verfahren zum Herstellen von Kunststoffplatten (20), vorzugsweise aus thermoplastischem Kunststoff, wobei der Kunststoff durch Extrudieren aufgeschmolzen und in einer Flachdüse (2) zu einem flachen Band geformt und anschließend durch mindestens einen Walzenspalt geführt wird, dessen mindestens eine oder beide Walzen (10, 11, 12) mit negativen oder positiven Formen versehen sind, **dadurch gekennzeichnet, daß** Form-/Entform-Leisten (13) über den Umfang einer temperierten Kalanderwalze (10, 11, 12) angeordnet werden, die zur zerstörungsfreien Freigabe der kontinuierlich ausgebildeten Formen beweglich gelagert werden.

2. Verfahren nach Anspruch 1, **dadurch gekennzeichnet, daß** die Form-/Entform-Leisten (13) radial nach außen bewegt werden.

3. Verfahren zum Herstellen von Kunststoffplatten (20), vorzugsweise aus thermoplastischem Kunststoff, wobei der Kunststoff durch Extrudieren aufgeschmolzen und in einer Flachdüse (2) zu einem flachen Band geformt und anschließend durch mindestens einen Spalt geführt wird **dadurch gekennzeichnet, dass** der Spalt von einer temperierten Platte begrenzt wird, die mit negativen oder positiven Formen versehen ist, und, dass zur zerstörungsfreien Freigabe der kontinuierlich ausgebildeten Formen Form-/Entform-Leisten auf einer Fläche der temperierten Platte beweglich vorgesehen werden.

4. Vorrichtung zum Herstellen von Kunststoffplatten (20), vorzugsweise aus thermoplastischem Kunststoff, mit einem Extruder (1) und einer Flachdüse (2) durch die der aufgeschmolzene Kunststoff durch mindestens aus zwei Walzen (10, 11, 12) gebildeten Walzenspalt führbar ist, wobei mindestens eine der Walzen (11) mit negativen oder positiven Formen versehen ist, **dadurch gekennzeichnet, daß** zur zerstörungsfreien Freigabe der kontinuierlich ausgebildeten Formen Form-/Entform-Leisten (13) über den Umfang einer temperierten Kalanderwalze (10, 11, 12) beweglich ausgebildet sind.

5. Vorrichtung nach Anspruch 4, **dadurch gekennzeichnet, daß** die Form-/Entform-Leisten (13) radial nach außen beweglich gelagert sind.

6. Vorrichtung nach mindestens einem der Ansprüche 4 oder 5,**dadurch gekennzeichnet, daß** die Form-/Entform-Leisten (13) mittels in den Walzen (10, 11, 12) angeordneten Kolben-/Zylinder-Anordnungen (16) hydraulisch oder pneumatisch radial bewegbar sind.

7. Vorrichtung nach mindestens einem der Ansprüche 8 bis 12,**dadurch gekennzeichnet, daß** die in die Form-/Entform-Leisten (13) eingearbeiteten Formen als auf den Kopf gestellte Kegel oder Pyramiden ausgeführt sind.

8. Vorrichtung nach den Ansprüchen 4 bis 7,**dadurch gekennzeichnet, daß** die in die Form-/Entform-Leisten (13) eingearbeiteten Formen als Stegprofile quer zur Produktionsrichtung ausgeführt sind.

9. Vorrichtung zum Herstellen von Kunststoffplatten (20), vorzugsweise aus thermoplastischem Kunststoff, mit einem Extruder (1) und einer Flachdüse (2), durch die der aufgeschmolzene Kunststoff durch einen Spalt führbar ist, **dadurch gekennzeichnet, dass** der Spalt von einer temperierten Platte begrenzt wird, die mit negativen oder positiven Formen versehen ist und, dass zur zerstörungsfreien Freigabe der kontinuierlich ausgebildeten Formen Form-/Entform-Leisten auf der Fläche der temperierten Platte beweglich vorgesehen sind.

## Claims

1. A method of manufacturing synthetic material sheets (20), preferably from thermoplastic synthetic material, wherein the synthetic material is melted by extrusion and shaped in a flat nozzle (2) to form a flat strip and then guided through at least one roll gap, at least one or both rolls (10, 11, 12) being provided with negative or positive profiles, **characterised in that** profiling/profile-release strips (13) are arranged over the circumference of a heated calender roll (10, 11, 12) and are movably mounted for the non-destructive release of the continuously formed profiles.

2. A method according to claim 1, **characterised in that** the profiling/profile-release strips (13) are moved radially outwards.

3. A method of manufacturing synthetic material sheets (20), preferably from thermoplastic synthetic material, wherein the synthetic material is melted by extrusion and shaped in a flat nozzle (2) to form a flat strip and then guided through at least one gap, **characterised in that** the gap is bounded by a heated plate provided with negative or positive profiles, and **in that** profiling/profile-release strips are movably provided on a surface of the heated plate for the non-destructive release of the continuously formed profiles.

4. A device for manufacturing synthetic material sheets (20), preferably from thermoplastic synthetic material, comprising an extruder (1) and a flat nozzle (2), by means of which the molten synthetic material is guidable through at least one roll gap formed by two rolls (10, 11, 12), wherein at least one of the rolls (11) is provided with negative or positive profiles, **characterised in that** profiling/profile-release strips (13) are movably arranged over the circumference of a heated calender roll (10, 11, 12) for the non-destructive release of the continuously formed profiles.

5. A device according to claim 4, **characterised in that** the profiling/profile-release strips (13) are mounted so as to be movable radially outwards.

6. A device according to at least one of claims 4 and 5, **characterised in that** the profiling/profile-release strips (13) are hydraulically or pneumatically radially movable by means of piston/cylinder arrangements (16) arranged in the rolls (10, 11, 12).

7. A device according to at least one of claims 8 to 12, **characterised in that** the profiles incorporated into the profiling/profile-release strips (13) are formed as inverted cones or pyramids.

8. A device according to claims 4 to 7, **characterised in that** the profiles incorporated into the profiling/profile-release strips (13) are formed as ribs extending transversely to the production direction.

9. A device for manufacturing synthetic material sheets (20), preferably from thermoplastic synthetic material, comprising an extruder (1) and a flat nozzle (2), by means of which the molten synthetic material is guidable through a gap, **characterised in that** the gap is bounded by a heated plate provided with negative or positive profiles, and **in that** profiling/profile-release strips are movably provided on the surface of the heated plate for the non-destructive release of the continuously formed profiles.

## Revendications

1. Procédé pour la fabrication de plaques en plastique (20), de préférence en matière thermoplastique, moyennant quoi la matière plastique est fondue par extrusion et formée en un ruban plat dans une filière plate (2) et est ensuite menée à travers au moins une fente entre cylindres, dont au moins un ou les deux cylindres (10, 11, 12) sont dotés de moules positifs ou négatifs, **caractérisé en ce que** les barres de moulage/démoulage (13) sont disposées tout autour de la circonférence d'un cylindre de calandrage tempéré (10, 11, 12) qui sont fixées de façon mobile pour la libération sans détérioration des moules formés de façon continue.

2. Procédé selon la revendication 1, **caractérisé en ce que** les barres de moulage/démoulage (13) sont déplacées radialement vers l'extérieur.

3. Procédé pour la fabrication de plaques en plastique (20), de préférence en matière thermoplastique, moyennant quoi la matière plastique est fondue par extrusion et formée en un ruban plat dans une filière plate (2) et est ensuite menée à travers au moins une fente, **caractérisé en ce que** la fente est délimitée par une plaque tempérée qui est munie de moules positifs ou négatifs, **en ce que** des barres de moulage/démoulage sont prévues de manière mobile sur une surface de la plaque tempérée pour la libération sans détérioration des moules formés de façon continue.

4. Dispositif pour la fabrication de plaques en plastique (20), de préférence en matière thermoplastique, avec une extrudeuse (1) et une filière plate (2) par laquelle la matière plastique fondue peut être guidée à travers une fente entre cylindres formée au moins par deux cylindres (10, 11, 12), moyennant quoi au moins l'un des cylindres (11) est pourvu de moules positifs ou négatifs, **caractérisé en ce que** des barres de moulage/démoulage (13) sont formées de façon mobile sur toute la circonférence d'un cylindre de calandrage tempéré (10, 11, 12) pour la libération sans détérioration de moules formés de façon continue.

5. Dispositif selon la revendication 4, **caractérisé en ce que** les barres de moulage/démoulage (13) sont fixées radialement de façon mobile vers l'extérieur.

6. Dispositif selon au moins l'une des revendications 4 ou 5, **caractérisé en ce que** les barres de moulage/démoulage (13) sont mobiles radialement de manière hydraulique ou pneumatique au moyen de dispositifs (16) de cylindres/pistons disposés dans les cylindres (10, 11, 12).

7. Dispositif selon au moins l'une des revendications 8 à 12, **caractérisé en ce que** les moules insérés dans les barres de moulage/démoulage (13) sont réalisés en cônes ou pyramides renversés.

8. Dispositif selon les revendications 4 à 7, **caractérisé en ce que** les moules insérés dans les barres de moulage/démoulage (13) sont réalisés comme profils de crampons transversalement au sens de la production.

9. Dispositif pour la production de plaques en plastique (20), de préférence en matière thermoplastique, avec une extrudeuse (1) et une filière plate (2) par laquelle la matière plastique fondue peut être guidée à travers une fente, **caractérisé en ce que** la fente est délimitée par une plaque tempérée qui est dotée de moules positifs ou négatifs, **en ce que** des barres de moulage/démoulage sont prévues de façon mobile sur la surface de la plaque tempérée pour la libération sans détérioration des moules formés de façon continue.
